# EUROPEAN PATENT APPLICATION

(11) **EP 4 745 655 A1**
(43) Date of publication of application: **20.05.2026**
(21) Application number: 24213141.5
(22) Date of filing: 15.11.2024
(51) Int. Cl.: G02F 1/01, G02B 6/122, G02F 1/025

(54) **NON-VOLATILE SWITCHABLE PHOTONIC COMPONENT WITH PHASE CHANGE MATERIAL**

(71) Applicant: ECOLE POLYTECHNIQUE FEDERALE DE LAUSANNE (EPFL), 1015 Lausanne (CH)
(72) Inventor: Furci, Hernán, 1201 Genève (CH); Cavadore, Eline, 1860 Aigle (CH); Zajac, Guillaume, 8400 Winterthur (CH); Seleznev, Daniil, 1003 Lausanne (CH)
(74) Representative: Banse & Steglich Patentanwälte PartmbB

(57) **Abstract**

The invention relates to a photonic component for setting non-volatile operational states, comprising:
- At least one light-guiding structure (3) formed in a silicon layer of a silicon-on-insulator substrate (2);
- At least one switching element (4) formed by an optical phase change material (8) and a heating structure (7) underneath thereof, wherein the at least one switching element (4) is laterally neighbored to the at least one light-guiding structure (3) so as to provide an evanescent coupling between the at least one light-guiding structure (3) and at least one switching element (4);
wherein the heating structure (7) of the switching element (4) is formed by a thinned portion of the silicon layer (22) of the silicon-on-insulator-substrate (2) with the lowest silicon thickness to provide a current path through the silicon layer (22), particularly along the direction of arrangement of the at least one light-guiding structure (3) and the at least one switching element (4), so that the current density of the current path is highest in the heating structure (7) of the at least one switching element (4).

## Description

### Technical field

The present invention relates to the use of phase change materials in photonic light-guiding structures, such as waveguide components. The present invention further relates to reconfigurable photonic components which can be set into distinct operating states in a non-volatile manner.

### Technical background

Reconfigurable photonic components provide versatility and mutability to photonic integrated circuits. Programmable circuits may be formed using components whose states may be switched in a non-volatile manner.

Integration of Phase Change Materials (PCM) into photonic circuits has been proposed as a means for setting non-volatile operating states. The phase change material is placed next or in between light-guiding structures to influence light transmission or light propagation or to provide selective coupling.

Phase change materials applied in photonics may be electrothermally actuated and require the application of a short heat pulse (usually below microsecond duration) to change their state. The phase change materials are therefore placed close to a heat source. So far, the integration of such photonic components and scalability is actually limited in the existing technologies.

Document J. Zheng et al., "Nonvolatile Electrically Reconfigurable Integrated Photonic Switch Enabled by a Silicon PIN Diode Heater", Adv. Mater. 32, 2001218 (2020). DOI: https:lldoi.org/10.1002/adma.202001218 discloses a reconfigurability of photonic integrated circuits using chalcogenide phase change materials placed on top of a waveguide. Phase transitions are actuated by in situ silicon PIN diode heaters. The actuation is implemented by direct heating in n++ and p++ doping of the Si outside the waveguide, and the region around the PCM is encapsulated with Al₂O₃ to provide robustness.

Document Z Fang et al., "Non-Volatile Reconfigurable Integrated Photonics Enabled by Broadband Low-Loss Phase Change Material"; Adv. Optical Mater. 9, 2002049 (2021). https://doi.org/10.1002/adom.202002049 discloses a photonic component with a waveguide and phase change material structure on top. As phase change material, the low loss Sb₂S₃ is used, by depositing a big patch exceeding the width of the waveguide. The actuation is implemented by capping the phase change material with an ITO layer, and Cr/Au electrodes on the sides.

Documents Zhang, Q.H. et al., Broadband nonvolatile photonic switching based on optical phase change materials: Beyond the classical figure-of-merit", Opt. Lett. 43, 94-97 (2018). https://doi.org/10.1364/OL.43.000094 and Xu, P.P. et al., "Low-Loss and Broadband Nonvolatile Phase-Change Directional Coupler Switches'', ACS Photonics 6, 553-557 (2019). https://doi.org/10.1021/acsphotonics.8b01628 disclose a photonic component where the phase change material GST is used on top of waveguides to regulate the coupling strength of directional couplers. The microfabrication is carried out by applying electron beam lithography wherein the phase change material is patterned by lift-off.

Documents Dong, B., et al,." Higher-dimensional processing using a photonic tensor core with continuous-time data", Nature Photonics, 17, 1080-1088 (2023), https://doi.org/10.1038/s41566-023-01313-x and Feldmann, J., et al., "Parallel convolutional processing using an integrated photonic tensor core", Nature, 589, 52-58, (2021), https://doi.org/10.1038/s41586-020-03070-1 disclose photonic MVM (matrix vector multiplication) system where the unit cells exploit a phase change material deposited in micrometer scale patches over Silicon Nitride waveguides. The actuation of the PCM (transitions from amorphous to crystalline and vice versa) is done using high power optical pulses delivered through a waveguide with a high intensity light source. The patterning of the phase change material patch is done as a post processing step. A lift-off mask in PMMA is patterned with electron beam lithography, and the phase change material and ITO capping layer are deposited by sputtering.

Document Zhou W. et al, "In-memory photonic dot-product engine with electrically programmable weight banks", Nature Communications 14:2887, (2023). https://doi.org/10.1038/s41467-023-38473-x discloses an MVM photonic system on an SOI platform to implement a dot-product engine. Phase change material patches are patterned on partially etched Silicon waveguides. p++ doping is used over the electrodes and the active waveguide region to increase conductivity. The phase change material patches are deposited on top of the waveguides, exceeding the waveguide size.

Documents X. Ma et al., "Photonic Tensor Core with Photonic Compute-in-Memory," 2022 Optical Fiber Communications Conference and Exhibition (OFC), San Diego, CA, USA, 2022, pp. 1-3 and M. Miscuglio et al., "Photonic tensor cores for machine learning", Applied Physics Reviews 7, 031404 disclose a photonic component where a lower loss phase change material (GeSbSe) is disposed as a micro-stripe over fully etched silicon waveguides, and is actuated electrothermally with a Tungsten heater. The heater is arranged close to the waveguide to avoid requiring superfluous amount of heat to change the state of phase change material on the active part of the waveguide. While the actuation can be easily operated by a standard electronic circuit, the choice of integrating the actuation through a metallic heater in vicinity of the waveguide presents potential optical losses and superfluous amount of heat is required for the actuation.

In view of the above state-of-the-art designs of photonic waveguide components with non-volatile switching/coupling, it is an object of the present invention to provide an improved integrated component design which allows a low-power and efficient electrothermal actuation and a facilitated production process on the basis of a standard planar technology for a large-scale manufacturing process.

### Summary of the invention

This object has been achieved by the photonic component with a phase change material element for non-volatile optical switching/coupling according to claim 1 and the method for producing a photonic component with a phase change material element according to the further independent claim.

Further embodiments are indicated in the depending subclaims.

According to a first aspect, a photonic component is provided for setting non-volatile operational states, comprising:
- At least one light-guiding structure formed in a silicon layer of a silicon-on-insulator substrate;
- At least one switching element formed by an optical phase change material and a heating structure underneath thereof, wherein the at least one switching element is laterally neighbored to the at least one light-guiding structure to provide an evanescent coupling;
- wherein the heating structure is formed by a thinned portion of the silicon layer of the silicon-on-insulator-substrate to provide a current path along the direction of arrangement of the at least one light-guiding structure and the at least one phase shifting element through the silicon layer with the highest current density of the current path.

Preferably, the light-guiding structure may comprise any structure with an optical functionality where the light is confined at least in a direction perpendicular to the main surface of the substrate (plane surface) within the device layer, such as a waveguide or elements which enable multimode propagation or even free-space-like diffractive propagation. Light guiding structures may e.g. comprise MMI (multimode interference) crossings, arrayed waveguide gratings, y-branch splitters and the like.

Phase change materials offer intrinsic non-volatility and have been exploited in a wide range of photonic applications. Phase change materials may be readily deposited on arbitrary substrates using standard techniques and therefore can be applied for manufacturing integrated photonic components.

Components with phase change materials can be switched back and forth between amorphous and crystalline states while its refractive index changes upon switching depending on a heating waveform applied. For example, phase change materials may be selected from GST, GSST, GeTe, Sb₂S₃, Sb₂Se₃ and the like. The phase change material is switchable between at least two stable solid states, each having a different refractive index for a specific wavelength. With the phase change material arranged in proximity of a light-guiding structure, such as a waveguide, each stable solid state corresponds to a distinct propagation condition for the guided light.

As such, photonic devices based on phase change materials offer several advantages to traditional photonic switching schemes and are a promising candidate for developing large scale non-volatile reprogrammable photonic components, such as switching devices, coupler systems, routing systems, photonic field programmable gate arrays, and the like.

The overall structure of the above photonic component is on a silicon-on-insulator substrate, formed by a silicon handling wafer, which on the relevant face has a silicon oxide base layer (usually called buried oxide) covered with a crystalline silicon layer. In the crystalline silicon layer at least one light-guiding structure is laterally arranged.

Lateral in the meaning as used herein means a direction along one of the main surface directions on the plane of the substrate. Preferably, the lateral direction extends across a longitudinal extension of the light-guiding structure or along the direction of arrangement of the light-guiding structure and the switching element.

A deep trench is etched close to or within the light-guiding structure, leaving a remainder of silicon on top of the buried oxide, and then filled (partially) with a phase change material. E.g. such a deep trench could be etched side-by-side to a waveguide within evanescent coupling distance. The trench filled with phase change material forms a switching element which can influence the characteristics of light propagation and/or diffraction in the light-guiding structure(s) thanks to its proximity to them. The switching element is embodied by the combination of the thin layer of silicon remaining at the bottom of the trench, and the phase change material deposited filling (partially) the trench. The thinned silicon acts as a heating element by Joule effect, and the phase change material acts as the optically switchable element.

It may be provided that the at least one light guiding structure or the at least one switching element has a boundary with the silicon slab area formed by lower thickness region, which has a decreased thickness compared to the thickness of the at least one light guiding structure. Furthermore, silicon slab areas may be laterally neighboring the lateral arrangement of at least one light-guiding structure and at least one switching element, wherein particularly the silicon slab areas have greater thickness than the heating structure. So, the boundaries of the optical light-guiding structure waveguide(s) and the switching element(s) are arranged laterally. Thus, the light-guiding structure(s), the silicon slab and the silicon at the bottom of deep trench acting as a heater for the switching element(s) are part of the same silicon device layer and form a continuous silicon path that may conduct an electric current. An implantation of a doping material over this continuous region may increase conductivity to provide a current path for powering the heating structure.

It may be provided that the heating structure is heated by applying an electrical voltage on electrodes, wherein the electrodes are provided on contact areas of the silicon layer, be it on an unetched region or on a shallow etched region (the so called "slab region"). The electrodes can be arranged at the extremes of the successive or lateral arrangement of slab regions, light-guiding structure(s) and switching element(s) in the plane of the substrate, to receive actuation voltage-current pulses for driving the heating structure (producing a heating pulse by Joule effect).

It may be provided that the silicon layer is moderately to highly doped on a specific region comprising, in top view, the electrodes and part of or all of the lateral arrangement of slab regions, light-guiding structure(s) and switching element(s), typically with dopant concentrations between 10¹⁶ and 10²⁰ at/cm³, to increase electrical conductivity in this specific region by at least two decades compared to the non-doped silicon layer material. Thus, the silicon layer of the area of the photonic component including all the silicon regions connecting the two electrodes may have a high conductivity of 2 to 3 decades greater than the conductivity of the mere silicon material of the silicon layer. This allows both to confine the current laterally and to achieve high power densities in the heating element with moderate or low voltage applied on the electrodes.

It may be provided that an insulation trench is formed surrounding the electrodes over most of their perimeter, implemented by removing the total thickness of the silicon layer until reaching the buried oxide layer. This insulation trench has the purpose of better confining the current, obliging it to pass through the lateral arrangement of light guiding structures(s) and switching elements(s), but may be unnecessary when the doping concentration is sufficiently high to define by itself the conducting region where the current is confined.

The crystalline silicon layer of the silicon-on-insulator substrate may have a thickness of 200 to 300 nm, with a usual value of 220 nm that are standard in the photonic foundry practice. The trench-bottom silicon layer forming the heating structure beneath the phase change material has a thickness of between 30 and 100 nm, preferably 50 - 70 nm, thereby providing a small cross-section to increase current density for heat generation when actuated.

The deep trench and the use of the silicon-on-insulator substrate generate a restriction in the current path across the structure, with the lowest cross-section of the conductive silicon layer across the successive or lateral arrangement of switching element(s) and light-guiding structure(s) located at the switching element(s) heating structure(s). As a result, the highest volumetric heating power is generated under the phase change material when current is applied. An actuation sequence is achieved by the succession of two phases: a heating phase when the voltage and electric current are on, and a cooling phase in which no electric power is applied on the structure and the heat can diffuse to the surroundings. The small thickness of the layer of the heating structure allows a quick cooling, so that the phase change material may be brought into a permanent amorphous solid state by quickly dissipating the heat energy after the melting point was reached during the heating phase. For the crystallization, lower heating power is required, to take the phase change material above the solid crystallization temperature, but the pulse requires a minimal duration sufficient to let the atomic ordering of the crystal take place, before the cooling phase starts.

It may be provided the thickness of the light-guiding structure is between 200 and 300 nm, preferably between 210 and 240 nm. The thickness of the phase change material on top of the heating structure may be between 10 and 200 nm, preferably between 10 and 160 nm. The width of the switching element may be between 400 and 1,500 nm, preferably between 500 and 1100 nm. The width of the light-guiding structure may be between 400 and 1,000 nm, preferably between 500 and 700nm. The silicon slab formed aside of the light-guiding structure has a thickness of between 120 and 200 nm, preferably between 150 and 170 nm while its width is about a few microns. The total length (in the direction perpendicular to the lateral arrangement) of the at least one light-guiding structure and the at least one switching element may be between 2 µm and 100 µm.

The scheme described in this invention can be applied to many types of photonic components, but especially to the two most basic building blocks of a reconfigurable photonic circuit: a directional coupler component and a phase-shifter component.

In a coupler component, two particularly parallel optical waveguides enclose in between a deep trench filled with the phase change material to form the switching element. The optical coupling between the optical waveguides depends on the solid state of the phase change material between the optical waveguides.

In a phase shifter component, the waveguide is sandwiched by two switching elements laterally neighboring the optical waveguide. A phase shifter may also be defined by a waveguide neighbored by only one switching element on one side, but the sandwiching option is inherently symmetric.

According to a further aspect, a method for manufacturing a photonic component in an integrated manner is provided, comprising the steps of:
- Providing a silicon-on-insulator substrate
- Applying a selective shallow etching process to define the at least one light-guiding structure;
- Applying a selective deep etching process to define a deep trench neighboring the at least one light-guiding structure, wherein the deep trench has a height which ensures that a silicon layer is maintained at the bottom of the deep trench;
- depositing a phase change material into the deep trench.

The process may start with providing a silicon-on-insulator substrate with a silicon layer of a thickness of about 200 to 300 nm. By a shallow selective etching, the aerial extension of the structure, and the width or lateral dimensions of the light-guiding structure(s) are defined. The shallow etching of the silicon removes between 50 and 100 nm in areas besides the light-guiding structure. The non-etched parts may form the light-guiding structure, and the etched parts form the silicon slab area. The mask for shallow silicon etching may be achieved with a photolithography process as known in the art.

Subsequently, a deep silicon etching step is provided by which a deep trench is formed directly neighboring the light-guiding structure. The deep silicon etching process may be carried out by using lithographic masking and deep etching processes as known in the art. The deep etching is performed so as to leave a remaining silicon layer of about 30 to 100 nm, preferably 50 - 70 nm. The etched parts define the switching element location and extent.

A phase change material is selectively deposited in the deep trench using a lithographic masking process to accommodate the phase change material so as to finally complete the formation of the switching element. The phase change material is deposited into the deep trench to fill it up to a thickness which is between 10 and 200 nm from the etched silicon surface. It should be respected that top surface of the phase change material at the edge of the trench be placed lower than the top surface of the light-guiding structure.

The deep etching process may be used simultaneously to form an insulation trench through the silicon slab layer down to the silicon oxide, to electrically insulate the electrodes region from the rest of the substrate. These insulation trenches may also be realized by an independent ad hoc etching process.

It may be provided that the silicon layer is moderately to highly doped by an implantation process on limited regions around the component, at any part of the process before the phase change material deposition. This process may be done by doping with a p- or n-doping material using an implantation process, and using a lithographic mask to limit the extent of the doping to the electrodes and component region. This is made to increase the electrical conductivity of the silicon by two or three decades.

It may be provided that an encapsulation layer is deposited on top of the silicon and phase change material layers after the deep trench has been filled with the phase change material. This layer is preferably deposited by a conformal method, such as atomic layer deposition, although other methods can be considered.

After the encapsulation process of the surface, electrodes can be formed at two opposing sides of the photonic component which contact the doped silicon layer. The formation of the electrode requires the etching of the encapsulation (lithography required to limit the extent) and the deposition of metals on top of the open areas (e.g. by a lift-off process).

### Brief description of the drawings

Embodiments are described in more detail in conjunction with the accompanying drawings in which:
- Figure 1a and 1b: show a schematic top view on a directional coupler and a cross-section view;
- Figure 2a to 2c: show a schematic top view on a phase shifter component and cross-sectional views thereof with and without a distance between a waveguide and a switching element; and
- Fig. 3: shows the process steps to produce a photonic component as shown in Figs. 1a, 1b, 2a, 2b.

### Description of embodiments

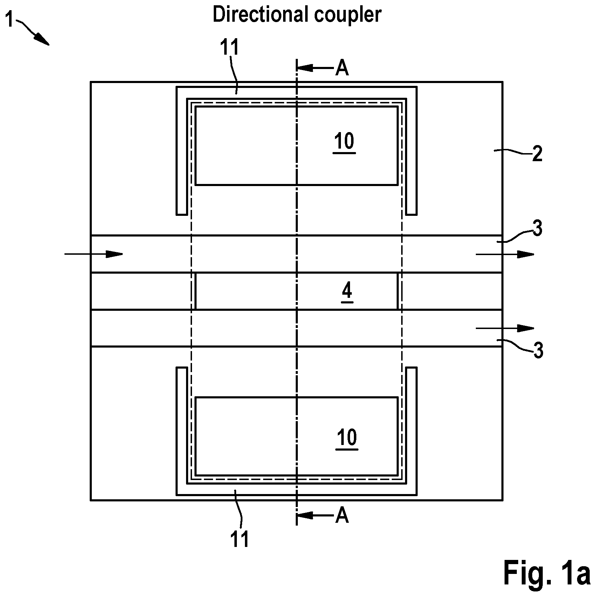

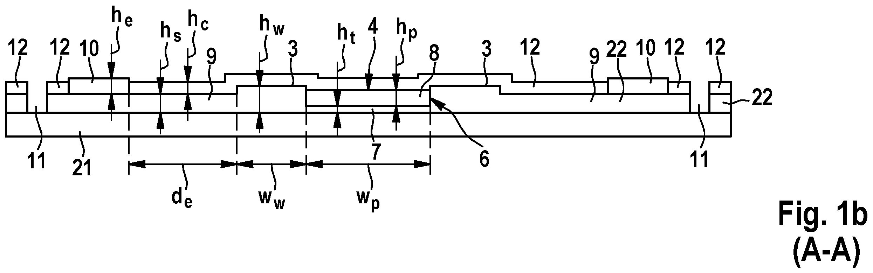

Figs. 1a and 1b show, respectively, a top view and a cross-sectional view along line A-A on a directional coupler 1 realized on a silicon-on-insulator substrate 2 using standard silicon planar process technology. The silicon-on-insulator substrate 2 has a base layer 21 of silicon oxide with a crystalline silicon layer 22 of a thickness h_{w} of about 200 to 300 nm, preferably between 210 and 240 nm, most preferred 220 nm.

Two longitudinal parallel optical waveguides (as light-guiding structure) 3 are laterally formed in the silicon layer 22 by removing silicon material aside of the optical waveguide 3 (from areas which do not form the optical waveguides) so that the structures of the optical waveguides are limited by a passive silicon slab area 9 of a thickness hₛ of 100 to 200 nm, preferably between 150 and 170 nm. On the outer boundaries of the optical waveguides, the passive silicon slab area is provided with a decreased thickness with respect to the top surface of the optical waveguide 3. The silicon waveguide may have a width w_{w} of between 400 and 1,000 nm, preferably between 500 and 700 nm.

Both optical waveguides 3 are parallel to each other with a switching element 4 in between with a width wₚ of 400 to 1500 nm, preferably between 500 and 1100 nm. The switching element 4 is formed in a deep trench 6 into the silicon layer down to a remaining thin silicon layer acting as a heating structure 7. The heating structure 7 has a thickness hₜ of 30 to 100 nm, preferably 50 - 70 nm.

On the heating structure 7 the phase change material 8 is applied/arranged forming the switching element. The phase change material may include or could be one such as GST, GSST, GeTe, Sb2S3, Sb2Se3, and the like. The phase change material has thickness hₚ of 10 and 200 nm, preferably between 10 and 160 nm with a top surface which is ideally lower than the top surface of the optical waveguides 3, i.e. that at the edge of the trench the phase change material is lower than the topmost silicon surface. The silicon layer 22 is doped by means of an implantation process with a doping material, such as B, P or the like, so that the electrical conductivity is increased by two to three decades. The doping region in top view comprises the electrodes and the region of the waveguides and switching element over the whole length of the waveguide component, as depicted by the dashed line rectangle in Fig. 1a.

As the heating layer 7 formed in the doped silicon has the lowest thickness in view of the lateral arrangement, a current applied into the silicon layer across or perpendicular to the light propagation direction results in the highest current density in the heating structure 7, which leads to a direct heating of the phase change material thereon.

The silicon slab 9 formed aside of the optical waveguide 3 has a thickness hₛ of between 120 and 200 nm, preferably between 150 and 170 nm while its width dₑ is about a few microns.

The power is applied by electrodes 10 made of a conductive metal, such as tungsten or copper or the like, arranged on opposite sides with respect to the direction of lateral arrangement of the optical waveguides 3 and the switching element 4 directly on the doped silicon of the structured silicon layer 22.

An encapsulation layer 12 may be applied onto the optical waveguide 3, the silicon slab area 9 and the switching element 4. The thickness h_{c} of the encapsulation layer may be larger than 50 nm.

Most of the perimeter of the electrodes may be encompassed by an insulation trench 11 through the silicon layer down to the silicon oxide base layer. This serves to electrically isolate the current path through the silicon layer from the rest of the substrate 2. This trench may not be necessary when the doping provides enough conductivity to confine the current to the doped region, delimited within the dashed rectangle on the top view in Fig. 1a.

The region between the waveguides outside the switching element 4 (to the left and right of 4 in the Fig. 1a) is of slab type, with silicon thickness hₛ.

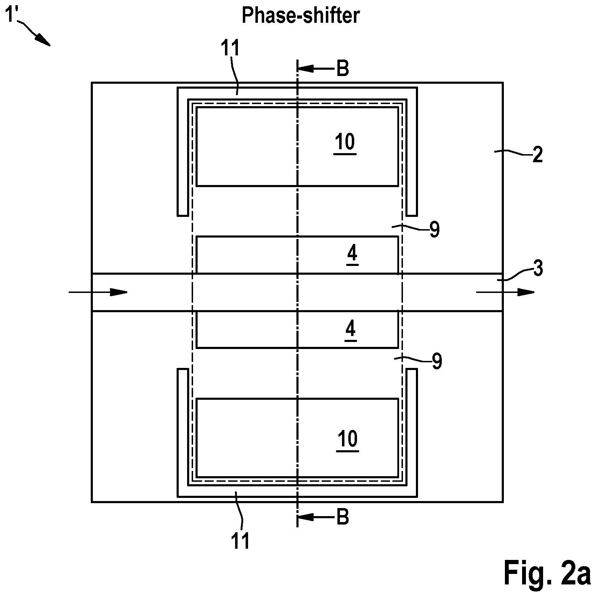

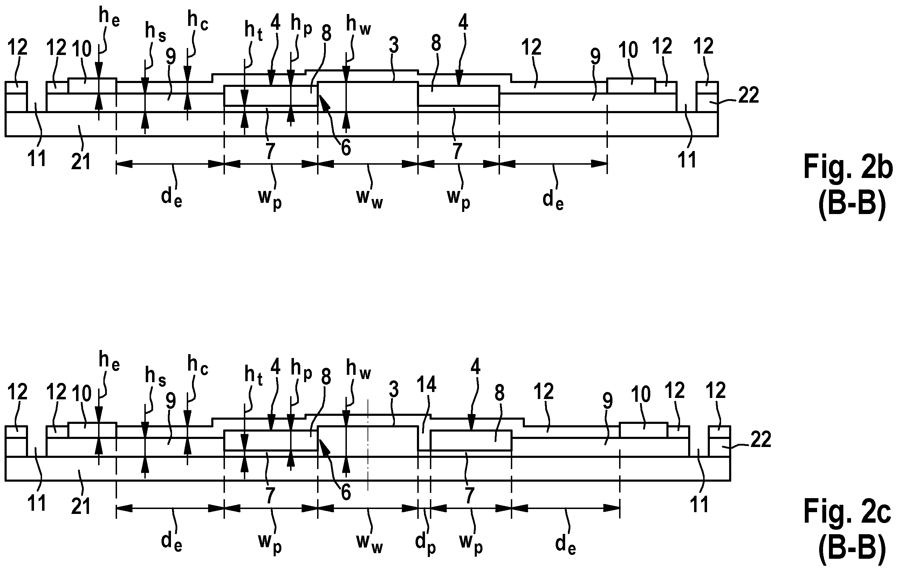

In Figures 2a, 2b and 2c, a phase shifter component 1' is shown in a top view and in a cross-sectional view along line B-B, respectively. Elements with the same reference numbers indicate elements with the same or similar function and arrangement.

The phase shifter component 1' is provided with the same elements as the directional coupler. The phase shifter component 1' has a single optical waveguide 3 formed in the silicon layer 22 of the silicon insulator substrate 2 which is provided with switching elements 4 on opposite lateral sides of the optical waveguide 3. The switching element 4 is formed with a heating structure 7 as a thin silicon layer on which the phase change material 8 is applied.

Basically, the dimensions for the switching element 4, the optical waveguide 3 and the silicon slab 9 may be similar to the dimensions of the switching element of the embodiment of Fig. 1.

As shown in Figure 2b, the edge of each trench closest to the (central) waveguide may coincide with the edge of the waveguide (adjacent PCM). As shown in Figure 2c, there might be a premeditated distance 14 (evanescent coupling distance) between waveguide and phase change material where the silicon may present either the heating element thickness (as depicted in the drawing) or the slab thickness (not depicted), with the purpose of moderating the effect of the switching element 4 on the light propagation properties. This option may be exploited to allow some of the components not to be so short, thus avoiding their sensitivity to fabrication imperfection. The values of the lateral neighboring distance between phase change material and (central) waveguide may vary between 0 and 500 nm.

As in the embodiment of Figs. 1a and 1b, the structured silicon layer may be moderately to highly doped to obtain a high electrical conductivity (within the dashed rectangle in Fig. 2a), while the thickness reduced silicon layer beneath the phase change material acting as a heating structure will carry the highest current density in operation to provide a good heat generation into the phase change material and heat dissipation into the silicon oxide base layer 21 when heat generation is cut off.

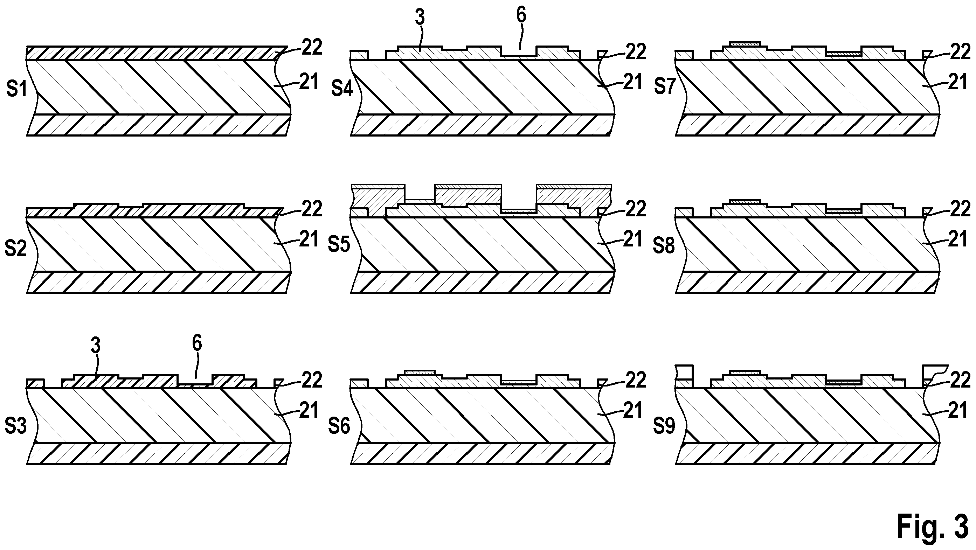

Fig. 3 shows the process steps for forming an optical component with a silicon waveguide and neighboring phase change element to produce one of the directional coupler component 1, the phase shifter component 1' and a coupling array.

In step S1, a silicon-on-insulator substrate 2 is provided having the silicon oxide layer 21 and the crystalline silicon layer 22 with a thickness of about 200 - 300 nm, preferably of about 210 - 240 nm.

In step S2 after defining the area of the light-guiding structure(s) 3 by masking by means of photolithography a shallow etching is performed to have the light-guiding structure(s) (masked) unetched and the surrounding areas (unmasked) etched down to a thickness (over silicon oxide) of 120 to 200 nm, preferably 150 - 170 nm.

Furthermore, a further step S3 of selective etching is applied to form a deep trench 6 neighboring the light-guiding structure(s) 3 down to a remaining silicon layer with a thickness between 30 and 100 nm, preferably 50 - 70 nm, which shall form the heating structure 7.

In the next step S4, the silicon can be doped by an implantation process to provide high electrical conductivity. The doping is preferably performed through a lithography mask to selectively target the regions of the components. Doping of the silicon can also be performed directly after providing the silicon-on-insulator substrate 2, although this might require to first etch on the substrate alignment marks that will be the reference for pattern layer superposition through the whole process.

Furthermore, in step S5 the deep trench 6 formed aside of the light-guiding structure(s) 3 is filled with the phase change material by a thin film deposition process, e.g. sputtering. This step is performed after a lithography mask is applied, keeping the deep trench open on this mask for filling it with the phase change material. The thickness of the phase change material may be between 10 and 200 nm, preferably between 10 and 160 nm. This step can also be used to deposit phase change material on top of (some of) the light-guiding structure(s), if desired.

After the removal of the mask in step S6, the area of the component is encapsulated in step S7 with a layer of an electrically insulating and transparent material, such as silicon oxide or aluminum oxide. The thickness of the encapsulation layer is larger than 50 nm.

In step S8 the encapsulation layer is removed in contact areas on opposite sides of the arrangement of the light-guiding structure(s) 3 and switching element 4 so that in step S9 electrodes 10 can be applied by performing an electrode metallization directly on the silicon.

## Claims

1. A photonic component for setting non-volatile operational states, comprising:
- At least one light-guiding structure (3) formed in a silicon layer of a silicon-on-insulator substrate (2);
- At least one switching element (4) formed by an optical phase change material (8) and a heating structure (7) underneath thereof, wherein the at least one switching element (4) is laterally neighbored to the at least one light-guiding structure (3) so as to provide an evanescent coupling between the at least one light-guiding structure (3) and at least one switching element (4);
wherein the heating structure (7) of the switching element (4) is formed by a thinned portion of the silicon layer (22) of the silicon-on-insulator-substrate (2) with the lowest silicon thickness to provide a current path through the silicon layer (22), particularly along the direction of arrangement of the at least one light-guiding structure (3) and the at least one switching element (4), so that the current density of the current path is highest in the heating structure (7) of the at least one switching element (4).

2. The photonic component according to claim 1, wherein the light-guiding structure (3) comprises a waveguide and/or the switching element (4) is elongated in the waveguide propagation direction.

3. The photonic component according to claim 1 or 2, wherein the silicon layer (22) is moderately to highly doped to increase electrical conductivity by at least two decades compared to the non-doped silicon layer material.

4. The photonic component according to any of the claims 1 to 3, wherein the heating structure is configured to be heated by applying an electrical voltage on electrodes (10), wherein the electrodes (10) are provided on contact areas of the silicon layer (22) which are arranged on opposite sides along the lateral arrangement of the at least one light-guiding structure (3) and the at least one switching element (4).

5. The photonic component according to claim 4, wherein an insulation trench (11) is formed at least partially surrounding the electrodes (10).

6. The photonic component according to any of the claims 1 to 4, wherein the at least one light-guiding structure (3) or at least one switching element (4) has a boundary with at least one silicon slab area (9), which has a decreased thickness compared to the thickness of the at least one light-guiding structure (3).

7. The photonic component according to claim 6, wherein the at least one silicon slab area (9) is laterally neighboring on both sides the lateral arrangement of at least one light-guiding structure (3) and at least one switching element (4), wherein particularly the at least one silicon slab area (9) has a greater thickness than the heating structure (7).

8. The photonic component according to any of the claims 1 to 7, wherein the at least one switching element (3) is placed in a deep trench (6) formed in the silicon layer (22), wherein the deep trench (6) is partially or totally filled by the phase change material (8).

9. The photonic component according to any of the claims 1 to 8, wherein the heating structure (7) beneath the phase change material (8) has a thickness of between 30 and 100 nm, preferably 50 - 70 nm, and/or wherein the thickness of the at least one light-guiding structure (3) is between 200 and 300 nm, preferably between 210 and 240 nm, and/or wherein the thickness of the phase change material (8) on top of the heating structure (7) is between 10 and 200 nm, preferably between 10 and 160 nm, and/or
wherein the width of the switching element (4) is between 400 and 1500 nm, preferably between 500 and 1100 nm, and/or
wherein the width of the light-guiding structure (3) is between 400 and 1000 nm, preferably between 500 and 700 nm, and/or
wherein a silicon slab area (9) forming aside of the light-guiding structure (3) has a thickness of between 120 and 200 nm, preferably between 150 and 170 nm and/or
wherein the total length of the component perpendicular to the direction of lateral arrangement is between 2 µm and 100 µm.

10. The photonic component according to any of the claims 1 to 9, wherein at least one of:
- the at least one switching element (4) is directly neighbored to the at least one light-guiding structure (3) or neighbored in an evanescent coupling distance (14) to provide an evanescent coupling;
- the at least one light-guiding structure (3) is provided which is neighbored to one switching element (4) or sandwiched between two switching elements (4) to form a phase shifter (1') or optical attenuator component; and
- the at least one switching element (4) is provided which is sandwiched between two light-guiding structures (3) to form a directional coupler (1).

11. Method for manufacturing a photonic component in an integrated manner, comprising the steps of:
- Providing a silicon-on-insulator substrate (2);
- Applying a selective shallow etching process to define the at least one light-guiding structure (3);
- Applying a selective deep etching process to define a deep trench (6) neighboring the at least one light-guiding structure (3), wherein the deep trench (6) has a height which ensures that a thin silicon layer (22) is maintained at the bottom of the deep trench (6);
- Filling the deep trench (6) with a phase change material (8).

12. Method according to claim 11, wherein a selective etching process is applied to reach the buried oxide, for the formation of an electrical insulation trench (11).

13. Method according to claim 11 and 12, wherein the silicon layer (22) is moderately to highly doped by an implantation process.

14. Method according to claims 11 to 13, wherein an encapsulation layer, particularly a dielectric layer, is deposited on top of the surface of the component after the deep trench has been filled with the phase change material (8).

15. Method according to any of the claims 11 to 14, wherein the encapsulation layer is opened to access the doped silicon underneath and to form contact electrodes on it through metallization.
